# EUROPEAN PATENT APPLICATION

(11) **EP 4 016 523 A1**
(43) Date of publication of application: **22.06.2022**
(21) Application number: 20306597.4
(22) Date of filing: 17.12.2020
(51) Int. Cl.: G10K 15/02, H02P 25/024, G10K 11/178, H02P 25/14, H02P 27/08, B06B 1/02

(54) **MOTOR SIGNAL INJECTION FOR AUDIBLE SOUND PRODUCTION**

(71) Applicant: Schneider Toshiba Inverter Europe SAS, 27120 Pacy-sur-Eure (FR)
(72) Inventor: FRAPPE, Emmanuel, 92100 Boulogne Billancourt (FR); RAVIER, Vincent, 27000 EVREUX (FR)
(74) Representative: Plasseraud IP

(57) **Abstract**

There is proposed a method for producing audible sound in an electric motor, implemented in a variable speed drive, wherein the method comprises: determining a control voltage (u₀) to be applied to the motor (14); applying a modulation process on the control voltage (u₀) to obtain an excitation voltage (u_{PWM}), the modulation process comprising injecting an audio signal (s); applying the excitation voltage (u_{PWM}) to the motor (14), the motor (14) producing audible sound as a result of the audio signal (s).

## Description

### Technical Field

This disclosure relates to a method for producing audible sound in an electric motor. This disclosure also relates to a variable speed drive capable of controlling the electric motor to produce audible sound.

### Background Art

Acoustic noise of an electric motor can be divided into mechanical noise, aerodynamic noise and electro-magnetic noise. Mechanical noise is produced by eccentricities, bearing rotation or misalignments within the motor. Aerodynamic noise is mainly constituted by air turbulence, for example generated by a fan. The electromagnetic part of the noise is induced by magnetic forces that arise as a control voltage is applied to the motor.

When the motor is controlled by a variable speed drive (VSD), the control voltage applied to the motor is typically a pulse width modulation (PWM) signal. In such cases, due to the high frequency nature of the PWM signal, the electromagnetic part of the noise becomes significant.

As a result, it appears that injecting a defined signal into the control voltage could translate into an audible sound produced by the motor. The audible sound could be used to provide valuable information to operators. The audible sound could for example be a warning signal in case of a failure or a deficiency used to provide additional safety measures during the operation of the motor.

However, a concern over injecting a signal into the control voltage is that it may interfere with the desired operation of the motor. The injected signal could for example have an undesired effect on the speed and torque produced by the motor.

The present disclosure aims to provide a method to produce audible sound without compromising the normal operation of the motor.

### Summary

It is proposed a method for producing audible sound in an electric motor, implemented in a variable speed drive, wherein the method comprises:
- determining a control voltage to be applied to the motor;
- applying a modulation process on the control voltage to obtain an excitation voltage, the modulation process comprising injecting an audio signal;
- applying the excitation voltage to the motor, the motor producing audible sound as a result of the audio signal.

Thus, the motor can be used to produce audible sound in parallel to being in operation. The motor can provide valuable information to operators surrounding the motor, thereby reducing the risk of failure or injuries. Operators no longer have to access the variable speed drive to retrieve the information, as it can be heard directly from the motor.

The following features, can be optionally implemented, separately or in combination one with the others:
- applying the modulation process on the control voltage comprises injecting the audio signal into the control voltage to obtain a combined signal and converting the combined signal into the excitation voltage by pulse width modulation;
- the audio signal has a frequency bandwidth within an interval defined by a frequency of the control voltage and a frequency of a pulse width modulation carrier used to convert the combined signal into the excitation voltage;
- the frequency bandwidth of the audio signal is between 200 Hz and 900 Hz;
- the audio signal is a pulse width modulation carrier, and applying the modulation process on the control voltage comprises injecting the pulse width modulation carrier into the control voltage;
- a frequency bandwidth of the pulse width modulation carrier is between 2 kHz and 16 kHz;
- the method comprises detecting an event and triggering producing audible sound in the electric motor when said event is detected;
- the event is chosen in a group comprising: a failure, an operating condition or a preventive maintenance alert;
- the method comprises sensing the audible sound produced by the motor to determine the position of the motor, and forming a feedback loop by updating the control voltage with the position of the motor;
- the method comprises sensing the audible sound produced by the motor to determine the speed of the motor, and adjusting control settings used to determine the control voltage based on the speed of the motor;
- the method comprises sensing the audible sound produced by the motor to detect variations between the audio signal and the audible sound produced by the motor, and detecting a fault or an aging of the motor based on the variations;
- the method comprises comprising sensing ambient noise around the motor, and defining the audio signal to cancel the ambient noise.

In another aspect, it is proposed a variable speed drive for an electric motor comprising a processor and a memory, the processor being configured to operate according to the above method.

In yet another aspect, it is proposed an electric drive assembly comprising the variable speed drive and an electric motor controlled by said variable speed drive.

In yet another aspect, it is proposed a computer-readable storage medium comprising instructions which, when executed by a processor, cause the processor to carry out the above method.

### Brief Description of Drawings

Other features, details and advantages will be shown in the following detailed description and on the figures, on which:
Fig. 1

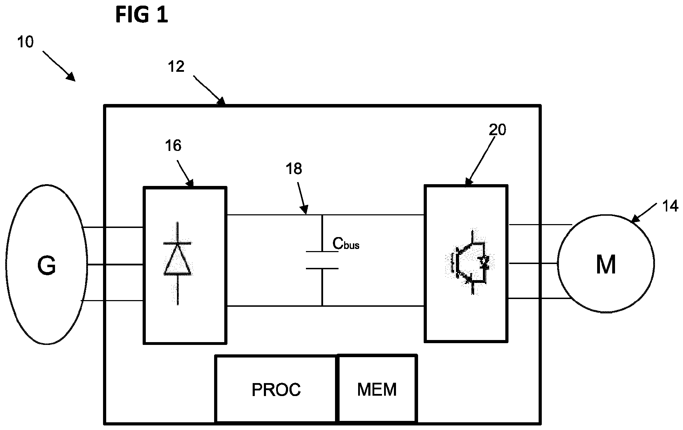

   [Fig. 1] schematically illustrates an example of a variable speed drive connected to an electrical grid and a motor.
**Fig. 2**

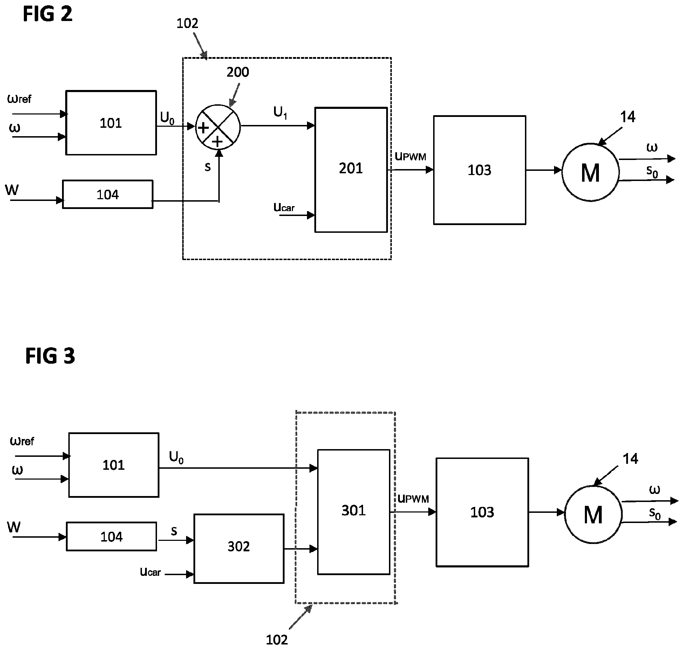

   [Fig. 2] schematically illustrates a first embodiment of a control system that can be used to generate audible noise at the motor of Figure 1.
**Fig. 3**
   [Fig. 3] schematically illustrates a second embodiment of a control system that can be used to generate audible noise at the motor of Figure 1.

### Description of Embodiments

Figure 1 is a schematic diagram of an electric drive assembly 10 according to the present disclosure. The electric drive assembly 10 may be used in diverse industrial settings. For example, it may drive a fan of a heating, ventilation and air conditioning (HVAC) system. As another example, it may also be used to drive a water pump of a sewage installation. As yet another example, it may drive a conveyer on an assembly line. Many other industrial applications may be envisaged by the skilled person.

The electric drive assembly 10 comprises a variable speed drive 12, or VSD, and an electric motor 14.

Preferably, the electric motor 14 is an AC (Alternating Current) motor 14, preferably a synchronous motor, such as a permanent magnet synchronous motor (PMSM), a synchronous reluctance motor (SynRM), or an asynchronous induction motor (IM).

The variable speed drive 12 is electrically connected to the electric motor 14. The variable speed drive 12 controls the operation of the electric motor 14 according to a control method. The variable speed drive 12 enables the electric motor 14 to be operated at a speed desired for the application. The variable speed drive 12 may also allow controlling the torque output of the electric motor 14 to a load.

The variable speed 12 drive generally comprise a rectifier module 16, a DC (Direct Current) power bus 18 and an inverter module 20.

The rectifier module 16 comprises a diode bridge configured to convert a 3-phase AC voltage provided by an electrical grid G to a DC voltage. The DC voltage outputted by the rectifier module 12 may be applied to the DC power bus 18.

The DC power bus 18 comprises two power lines connected together by a bus capacitor C_{bus} configured to stabilize the voltage of the bus 18. The output of the DC power bus 18 may be connected to the inverter module 20.

The inverter module 20 comprises several switching arms each comprising power transistors, for example of the IGBT (Insulated Gate Bipolar Transistor) type. The inverter module 20 may be intended to cut off the voltage supplied by the DC power bus 16, to achieve a variable output voltage which can operate the electric motor 14.

In addition, the variable speed drive 12 comprises a processor PROC. The processor PROC controls the other electrical components of the variable speed drive 12. The processor PROC is configured to operate according to the control method.

The variable speed drive 12 also comprises a non-transitory machine-readable or computer readable storage medium, such as, for example, memory or storage unit MEM, whereby the non-transitory machine-readable storage medium is encoded with instructions executable by processor PROC, the machine-readable storage medium comprising instructions to operate processor PROC to perform as per the control method. A computer readable storage according to this disclosure may be any electronic, magnetic, optical or other physical storage device that stores executable instructions. The computer readable storage may be, for example, Random Access Memory (RAM), an Electrically Erasable Programmable Read Only Memory (EEPROM), a storage drive, and optical disk, and the like.

Figures 2 and 3 both illustrate a control system used by the variable speed drive 12 to produce audible sound during motor operation. The control system enables the variable speed drive 12 to operate according to the method described below.

The method comprises, at step 101, determining a control voltage u₀. The control voltage u₀ is that which, when applied to the motor 14, will cause it to operate in the conditions desired for the application. For example, the control voltage u₀ may enable the motor 14 to operate at as desired speed.

Determining the control voltage u₀ of the motor at step 101 may be achieved by different control methods. The control method can be chosen according to the desired application. The control method could for example be Voltage/frequency control (V/f) for its simple implementation. The control method could also be Field Oriented Control (FOC), which provides more dynamic control possibilities.

In addition, the control method can be an open loop control method or a closed loop control method. In an open loop control method, determining the control voltage u₀ relies on a speed reference ω_{ref}. The speed reference ω_{ref} is that which the motor 14 is desired to operate at for the application. In a closed loop control method, determining the control voltage u₀ also relies on measurements taken at the motor 14. Measurements taken at the motor 14 provide feedback on the instantaneous status of the motor 14. The variable speed drive 12 adjusts the control voltage u₀ based on the feedback received.

In some examples, measurements taken at the motor 14 can be "sensorless". The control method may be a sensorless control method. This means that the feedback entirely relies on current measurements provided by a current sensor. There are no external sensors mounted on the motor 14, such as shaft encoders and the like, to provide feedback to the variable speed drive 12 on the status of the motor 14. However, measurements at the motor 14 could also be taken by sensors mounted on the motor 14.

The method further comprises, at step 102, applying a modulation process on the control voltage u₀ to define an excitation voltage u_{PWM}. The modulation process comprises injecting an audio signal s into the control voltage u₀. The excitation voltage u_{PWM} carries the audio signal s.

A first example of the modulation process is described with reference to figure 2.

In the example shown in figure 2, the modulation process comprises, at step 200, injecting the audio signal s into the control voltage u₀. Injecting the audio signal s into the control voltage u₀ produces a combined signal u₁. The combined signal u₁ is the combination of the control voltage u₀ and the audio signal s. In other word, the audio signal s integrates the control voltage u₀.

In this case, the audio signal s may be any type of audio signal s. The audio signal s may be a single frequency signal or a multiple frequency signal, in particular a signal with a fundamental frequency and any number of harmonic frequencies. The one or more frequencies of the audio signal s may vary with time. The audio signal s may also comprise a single amplitude or a different amplitudes for each frequency. The one or more amplitudes of the audio signal s may vary with time. Thus, the audio signal s can be used to produce a constant sound, a voice or a tune.

Preferably, a frequency bandwidth of the audio signal s is between 200 Hz and 900 Hz. Such a frequency bandwidth limits the effect of the audio signal s on the normal operation of the motor 14. The motor 14 may operate in the conditions dictated by the control voltage u₀ despite the injection of the audio signal s.

As shown in figure 2, the method further comprises, at step 201, converting the combined signal u₁ into the excitation voltage u_{PWM} by pulse width modulation. The excitation voltage u_{PWM} is a pulse width modulated voltage. Converting the combined signal u₁ to a pulse width modulation voltage u_{PWM} uses a pulse width modulation carrier u_{car}. Using the pulse width modulation carrier u_{car} refers to modulating the combined signal u₁ with the pulse width modulation carrier u_{car}. The pulse-width modulated voltage u_{pwm} emulates the combined signal u₁ to determine the operation of the electric motor 14 and cause it to produce sound during operation.

The frequency of the pulse-width modulated carrier u_{car} is superior to the one or more frequencies of the audio signal s. For example, the pulse-width modulated carrier u_{car} may have a frequency of 2 to 16 kHz. The frequency bandwidth of the audio signal s is therefore within an interval defined by the frequency of the control voltage u₀ and the frequency of the pulse-width modulated carrier u_{car}. Such an interval insures the audio signal s is not cut off from the excitation voltage u₁ during the conversion by pulse width modulation.

A second example of the modulation process is described with reference to figure 3.

In the example shown in figure 3, the modulation process comprises a step 301 of converting the control voltage u₀ to the excitation voltage u_{PWM} by pulse width modulation. The audio signal s is a pulse width modulation carrier, and converting the control voltage u₀ to a pulse width modulation voltage uses the audio signal s. No additional signal is added to the control voltage u₀ prior to converting the control voltage u₀ to the excitation voltage u_{PWM}. The modulation process uses existing pulse width modulation capabilities of the control system for the modulation process.

In this case, the audio signal s is a single frequency signal which may vary with time. The audio signal s may therefore be used to produce a constant sound or a tune. Preferably, the audio signal s has a frequency bandwidth between 2 kHz and 16 kHz. The audio signal s has a similar frequency to a standard pulse width modulation carrier u_{car}. Thus, the audio signal s enables the motor 14 to continue operating whilst producing the audible sound.

The method further comprises step 103 of applying the excitation voltage u_{PWM} to the motor 14. The excitation voltage u_{PWM} is sent to the converter 20 of the variable speed drive 12 to operate the motor 14. The motor 14 will react to the excitation voltage u_{PWM} by rotating at a speed ω and producing current y in stator windings. The motor 14 will also produce the audible sound as a result of the audio signal s carried in the excitation voltage u_{PWM}.

It should be noted that figures 2 and 3 show a single phase control system. This is only for simplification. Typically, the electric motor 14 will be a three-phase motor. In this case, an excitation voltage u_{pwm} is generated for each of the three phases of the motor 14.

In the illustrated examples, the method comprises a step 104 of detecting an event W to trigger the production of audible sound. The motor 14 may operate without producing audible sound until the event W is detected. The excitation voltage u_{PWM} carries no audio signal s until the event W is detected.

The event W may be a failure, an abnormal operating condition, for example a high temperature in the motor 14, a preventive maintenance alert, or any other information. The production of audible sound by the motor 14 removes the need for the operator to access the variable speed drive 12 to be informed of the occurrence of the event W. The operator may be alerted even if the variable speed drive 12 and the motor 14 are in separate rooms. The audible sound provides additional safety during operation.

Step 104 of detecting the event W may comprise defining the audio signal s according to the type of event W detected. Different audio signals may be chosen depending on the event W detected. For example, the detection of a failure may trigger a tune whilst a preventive maintenance alert may be a different a vocal message. The operator may be able to distinguish between different events.

In the example illustrated in figure 2, step 104 of detecting the event W triggers step 200 of injecting the audio signal s into the control voltage u₀. No audio signal s is injected into the control voltage u₀ prior to the event W being detected. Until the event W is detected at step 104, the control voltage u₀ is directly converted to the excitation voltage u_{PWM} by pulse width modulation.

In the example of figure 3, step 104 of detecting the event W triggers a step 302 of selecting the audio signal s to replace a standard pulse width modulation carrier u_{car}. Prior to the event W, the control voltage u₀ is converted to the excitation voltage u_{PWM} using the standard pulse width modulation carrier u_{car}. The standard pulse width modulation carrier u_{car} does not carry audible sound information. However, upon detection of the event W, the standard pulse width modulation carrier u_{car} is replaced with the audio signal s.

In addition, the method may comprise sensing the audible sound produced by the motor 14 and forming a feedback loop with step 101 of determining the control voltage u₀. The audible sound produced by the motor 14 may be sensed, for example by a sound sensor or the like. The audible sound contains information on the state of the motor 14, such as the speed of the motor 14. The speed of the motor 14 can be extracted from the audible sound to update the control voltage u₀. Closed loop control can be implemented into the control method.

The method may comprise sensing the audible sound produced by the motor 14 to determine the speed of the motor 14 as described above, and adjusting control settings used to determine the control voltage u₀ based on the speed of the motor. The control settings refer to the parameters used by the control method to determine the control voltage u₀ at step 101. The control settings can be adapted according to the actual speed of the motor. The voltage u₀ may therefore be more accurately determined in an open loop control method.

Further, the method may comprise sensing the audible sound produced by the motor 14 as described above and comparing the audible sound with the audio signal s. Variations between the audible sound and the audio signal s may indicate a fault or an aging of the motor 14. Indeed, an aged or faulty motor may not produce the audible sound as dictated by the audio signal s.

Further, the method may comprise sensing the ambient noise surrounding the motor 14 and defining the audio signal s according to the ambient noise. In such an example, ambient noise may be measured by a sound sensor positioned close to the motor 14. The audio signal s can be defined to cancel the ambient noise. More specifically, the audio signal s can be phase inverted by 180° to the ambient noise.

The present disclosure is not limited to the only examples described above but is susceptible to variations accessible to the man skilled in the art. For example, further signal processing blocks, such as amplification, filtering, logic steps can be implemented in the method.

## Claims

1. A method for producing audible sound in an electric motor (14), implemented in a variable speed drive (12), wherein the method comprises:
- determining a control voltage (u₀) to be applied to the motor (14);
- applying a modulation process on the control voltage (u₀) to obtain an excitation voltage (u_{PWM}), the modulation process comprising injecting an audio signal (s);
- applying the excitation voltage (u_{PWM}) to the motor (14), the motor (14) producing audible sound as a result of the audio signal (s).

2. Method according to claim 1, wherein applying the modulation process on the control voltage (u₀) comprises:
- injecting the audio signal (s) into the control voltage (u₀) to obtain a combined signal (u₁), and
- converting the combined signal (u₁) into the excitation voltage (u_{PWM}) by pulse width modulation.

3. Method according to claim 2, wherein the audio signal (s) has a frequency bandwidth within an interval defined by a frequency of the control voltage (u₀) and a frequency of a pulse width modulation carrier used to convert the combined signal into the excitation voltage (u_{PWM}).

4. Method according to claim 3, wherein the frequency bandwidth of the audio signal (s) is between 200 Hz and 900 Hz.

5. Method according to claim 1, wherein the audio signal (s) is a pulse width modulation carrier (s), and applying the modulation process on the control voltage (u₀) comprises injecting the pulse width modulation carrier (s) into the control voltage (u₀).

6. Method according to claim 5, wherein a frequency bandwidth of the pulse width modulation carrier (s) is between 2 kHz and 16 kHz.

7. Method according to any of the preceding claims, comprising detecting an event (W) and triggering producing audible sound in the electric motor (14) when said event is detected.

8. Method according to claim 8, wherein the event (W) is chosen in a group comprising: a failure, an operating condition or a preventive maintenance alert.

9. Method to any of the preceding claims, comprising sensing the audible sound produced by the motor (14) to determine the speed of the motor (14), and forming a feedback loop by updating the control voltage (u₀) with the position of the motor (14).

10. Method to any of the preceding claims, comprising sensing the audible sound produced by the motor (14) to determine the speed of the motor (14), and adjusting control settings used to determine the control voltage (u₀) based on the speed of the motor (14).

11. Method according to any of the preceding claims, comprising sensing the audible sound produced by the motor (14) to detect variations between the audio signal (s) and the audible sound produced by the motor (14), and detecting a fault or an aging of the motor (14) based on the variations.

12. Method according to any of the preceding claims, comprising sensing ambient noise around the motor (14), and defining the audio signal (s) to cancel the ambient noise.

13. A variable speed drive (12) for an electric motor (14) comprising a processor (PROC) and a memory (MEM), the processor (PROC) being configured to operate according to any of claims 1 to 12.

14. An electric drive assembly comprising the variable speed drive (12) according to claim 13 and an electric motor controlled by said variable speed drive (12).

15. A computer-readable storage medium comprising instructions which, when executed by a processor, cause the processor to carry out the method of any of claims 1 to 12.
